# EUROPÄISCHE PATENTSCHRIFT

(11) **EP 1 936 233 B1**
(45) Veröffentlichungstag und Bekanntmachung des Hinweises auf die Patenterteilung: **02.05.2012**
(21) Anmeldenummer: 07024664.0
(22) Anmeldetag: 19.12.2007
(51) Int. Cl.: F16H 1/28, F16D 3/72

(54) **Getriebeeinheit mit integrierter Ausgleichskupplung**
Gear unit with integrated self-aligning coupling
Unité d'engrenage dotée d'un accouplement compensateur intégré

(30) Priorität: 20.12.2006 DE 102006060389
(43) Veröffentlichungstag der Anmeldung: 25.06.2008
(73) Patentinhaber: Voith Turbo BHS Getriebe GmbH, 87527 Sonthofen (DE)
(72) Erfinder: Heidrich, Günther Dipl.-Ing., 87545 Burgberg (DE)
(74) Vertreter: Jordan, Volker Otto Wilhelm

(56) Entgegenhaltungen:
- DE-A1- 3 939 978
- DE-A1- 4 445 413
- DE-A1-102005 014 985

## Beschreibung

Die Erfindung betrifft eine Getriebeeinheit, umfassend eine relativ zu einem Getriebegehäuse drehbar gehaltene oder gelagerte Eingangsseite und eine relativ zum Getriebegehäuse drehbar gehaltene oder gelagerte Ausgangsseite und eine in dem Getriebegehäuse angeordnete Getriebeanordnung, insbesondere Planetengetriebeanordnung, die wenigstens einen untersetzenden oder übersetzenden Drehmomentübertragungspfad zwischen der Eingangsseite und der Ausgangsseite bereitstellt, wobei wenigstens einer von der Eingangsseite und der Ausgangsseite eine Ausgleichskupplung zugeordnet ist zumindest zum Ausgleich von radialem oder/und winkeligem oder/und axialem Versatz. Es wird insbesondere, aber nicht ausschließlich, an eine Planetengetriebe-Getriebeeinheit gedacht, und zwar speziell an ein so genanntes Stirnräderplanetengetriebe, wie es beispielsweise aus der DE 44 45 413 A1 in verschiedenen Ausführungen bekannt ist und üblicherweise mit einem Sonnenrad, Planetenrädern und einem Hohlrad ausgeführt ist, die beispielsweise mit Gradverzahnung oder Einfach- oder Mehrfach-Schrägverzahnungen ausgestattet sein können. Es wird vor allem, aber nicht ausschließlich, an Stirnräderplanetengetriebe der Bauart mit feststehendem Planetenträger gedacht, die auch unter dem Begriff "Standgetriebe" bekannt sind.

Die DE 44 45 413 A1 zeigt verschiedene Bauformen der Stirnräderplanetengetriebe (stationärer Planetenträger, stationäres Hohlrad und stationäres Sonnenrad) in Kombination mit einer eingangsseitigen und einer ausgangsseitigen flexiblen Ausgleichskupplung, von denen zumindest die auf der schnellen Getriebeseite vorgesehene Ausgleichskupplung als Doppelmembrankupplung ausgeführt ist. Beide flexiblen Kupplungen (Ausgleichskupplungen) sind jeweils an einem freien Ende einer langsam laufenden Welle bzw. schnell laufenden Welle des Stirnräderplanetengetriebes angeordnet und somit strukturell kein integraler Bestandteil des Stirnräderplanetengetriebes. Beide Ausgleichskupplungen tragen zur axialen Gesamtlänge der von den Ausgleichskupplungen und dem jeweiligen Stirnräderplanetengetriebe gebildeten Baugruppe bei. Ein mehrteiliges Getriebegehäuse des Stirnräderplanetengetriebes ist mit "Befestigungsfüßen" an einer unteren Gehäusehälfte ausgeführt, offensichtlich für die Anbringung des Getriebes auf einem Getriebefundament zwischen zwei vermittels des Stirnräderplanetengetriebes zu koppelnden Maschinen.

Stand der Technik sind ferner Getriebeeinheiten, die ohne eigenes Getriebefundament an dem Gehäuse einer zugeordneten Maschine gehalten sind. Dies ist für kleine, ein geringes Gewicht aufweisende Getriebeeinheiten eine technische Trivialität. Im Falle von für hohe Drehgeschwindigkeiten und hohe Drehmomente ausgelegten Getriebeeinheiten, beispielsweise zur Kopplung eines Generators mit einer Turbine oder zur Kopplung eines Motors mit einem Verdichter, weisen die Getriebeeinheiten aber ein sehr schwer zu beherrschendes großes Gewicht auf, mit dem nur schwer zu lösenden Problem der Ausrichtung der Gehäuse- bzw. Drehachsen. Hierzu gibt es einen Lösungsansatz der Firma RENK, nach der die Position der Getriebeeinheit an der zugeordneten großen, insbesondere elektrischen Maschine (insbesondere Elektromotor, Generator oder dergleichen) während der Montage der Getriebeeinheit an der Maschine insbesondere in Vertikalrichtung mittels eines unter der Bezeichnung "CASEALIGN" laufenden einstellbaren Zwischenflansches einstellbar ist. Nach der Einstellung und Beendigung des Montagevorgangs nimmt die Getriebeeinheit dann aber eine feste, ohne Demontage nicht mehr änderbare Vertikalposition an der Maschine ein.

Hintergrund der insoweit beim Stand der Technik bestehenden Probleme und des Lösungsansatzes der Firma RENK ist, dass die Gewichtslast der Getriebeeinheit, insbesondere des Getrieberadsatzes und des direkt an der Maschine angeflanschten Getriebegehäuses statisch zu elastischen Biegeverformungen des Getriebegehäuses und damit zu Schräglagen, etwa des Planetenträgers, seiner in der Regel starr befestigten Lagerbolzen und der auf diesen gelagerten Planetenrädern im Vergleich zu den Drehachsen bzw. Eingangs- und Ausgangswellen der mit dem Getriebe verbundenen beiden Maschinen führen. Ein betriebssicherer Einsatz einer solchen unmittelbar an einer Maschine gehaltenen "Kompakt-Getriebeeinheit", insbesondere "Kompakt-Ptanetengetriebeeinheit", wird durch die resultierenden, zwischen den einzelnen Getriebeteilen auftretenden radialen und winkligen Achslagerungen ernsthaft gefährdet und kann nach dem Lösungsansatz der Firma RENK aufgrund der zwar einstellbaren, aber dann festen Positionierung der Getriebeeinheit an der zugeordneten Maschine letztlich nur abgemildert werden, da sich im Betrieb noch Änderungen der Biegeverformungen und damit der Schräglagen ergeben können.

Problematisch beim Stand der Technik ist überdies auch noch Folgendes. Neben den Schräglagen ergeben sich gegenüber den Maschinenachsen durch einseitige Absenkung des Getriebegehäuses auch radiale Verlagerungen (Exzentritäten) der Achse aller Getriebezahnräder. Dabei entsteht an den korrespondierenden Verzahnungen eine ungleichmäßige Lastverteilung besonders entlang der Zahnbreite (Kantenpressung), die zur Überlastung der Zahnenden führt und dadurch Zahnschäden verursacht.

Auch an der Anflanschstelle des Getriebegehäuses mit dem Maschinengehäuse ist damit zu rechnen, dass sich dort - durch das für die Montage notwendige radiale Passungsspiel - Exzentritätsfehler bei der Gehäusezentrierung ergeben. Diese verändern zudem ihre Lage und Größe nach jeder Demontage des Getriebegehäuses (etwa für eine Routineinspektion) sehr nachteilig. Zu solchen bei stillstehendem Getriebe auftretenden Achsenverlagerungen kommen beim Lastlauf noch weitere Achsenverlagerungen durch dynamische Kräfte hinzu, die sich unter anderem aus Drehmomentstößen, aus Restunwuchten oder aus den bei den Gleitlagern der Planetenräder durch die Radrotation auftretenden Verlagerungen des Radmittelpunktes ergeben. Solche sich durch dynamische Kräfte ergebenden Achsverlagerungen können überhaupt nicht durch einen einstellbaren Zwischenflansch nach dem RENK-Ansatz ausgeglichen werden.

Eine der Erfindung zugrunde liegende Aufgabe ist, eine axial kurz bauende Getriebeeinheit der angesprochenen Art bereitzustellen, in die eine Ausgleichskupplung integriert ist.

Eine weitere der Erfindung zugrunde liegende Aufgabe ist, eine Getriebeeinheit der eingangs angesprochenen Art bereitzustellen, die zumindest einige der vorstehend angesprochenen Probleme löst oder zumindest mildert.

Eine weitere der Erfindung zugrunde liegende Aufgabe ist, eine Getriebeeinheit der eingangs angesprochenen Art bereitzustellen, die ohne eigenes Getriebefundament mit ihrem Getriebegehäuse an einer zugeordneten Maschine anbringbar ist und dabei hinsichtlich ihres zu beherrschenden, ggf. sehr großen Gewichts weniger problematisch in Bezug auf die Ausrichtung der Drehachsen bzw. Gehäuseachsen ist.

Eine weitere der Erfindung zugrunde liegende Aufgabe ist, eine Getriebeeinheit der eingangs angesprochenen Art bereitzustellen, bei der im Falle eines zu beherrschenden großen Gewichts die herkömmliche problematische Ausrichtung der beiden Gehäuseachsen zueinander nicht mehr durchgeführt werden muss oder zumindest nur innerhalb eines vergleichsweise leicht beherrschbaren Toleranzbereichs durchzuführen ist, auch nicht nach Getrieberemontagen, beispielsweise nach Routineinspektionen.

Zur Lösung wenigstens einer der angesprochenen Aufgabe wird für die eingangs angesprochene Getriebeeinheit vorgeschlagen, dass wenigstens ein Stützglied der Eingangsseite bzw. Ausgangsseite sich durch einen Durchgang der zugeordneten Ausgleichskupplung erstreckt und ein im Drehmomentübertragungspfad liegendes, relativ zum Getriebegehäuse drehbar gehaltenes oder gelagertes Getriebeelement der Getriebeanordnung an einem benachbart im Getriebegehäuse angeordneten Abstützabschnitt des Stützglieds abgestützt oder abstützbar ist und über die Ausgleichskupplung mit einem gegenüber dem Abstützabschnitt axial beabstandeten Ankoppelabschnitt des Stützglieds in Drehmomentübertragungsverbindung steht. Bei dem Stützglied kann es sich beispielsweise um eine Nabe oder eine Welle oder einen Flansch oder eine Kombination davon handeln.

Durch die Anordnung der Ausgleichskupplung im gleichen Axialbereich wie das Stützglied der Eingangsseite bzw. Ausgangsseite, nämlich radial außerhalb des Stützglieds um dieses herum, ist trotz der erfindungsgemäß erzielten Integration der Ausgleichskupplung in die Getriebeeinheit die axiale Baulänge der Getriebeeinheit durch die Ausgleichskupplung nicht zwingend vergrößert. Dabei ist trotz der im Drehmomentübertragungspfad zwischen dem Getriebeelement und dem Stützglied liegenden Ausgleichskupplung das zum Abstützabschnitt benachbarte Getriebeelement vermittels dem Stützglied abgestützt oder abstützbar. Es wird hier vor allem an eine axiale Abstützung oder Abstützbarkeit des Getriebeelements vermittels dem Stützglied gedacht, und zwar vor allem an der der Getriebeeinheit zugeordneten Maschine, insbesondere derjenigen Maschine, an der die Getriebeeinheit vorzugsweise anbringbar, insbesondere anflanschbar, ist.

Im Prinzip ist es denkbar, dass sowohl eingangsseitig als auch ausgangsseitig der Getriebeeinheit eine erfindungsgemäße Ausgleichskupplung in die Getriebeeinheit integriert ist. Man kann aber auch vorsehen, dass nur einer von der Eingangsseite und der Ausgangsseite eine Ausgleichskuppung entsprechend dem Erfindungsvorschlag zugeordnet und in die Getriebeeinheit strukturell integriert ist.

Weiterbildend wird vorgeschlagen, dass das Getriebeelement Bewegungsspiel relativ zum Abstützabschnitt aufweist. Es wird insbesondere an radiales Bewegungsspiel des Getriebeelements relativ zum Abstützabschnitt gedacht, um so Exzentrizitäten (radiale Versätze) und relative Verkippungen (Winkelversätze) der Drehachsen ausgleichen zu können.

Betreffend die Abstützung des Getriebeelements wird vor allem daran gedacht, dass das Getriebeelement für eine definierte axiale Positionierung am Abstützabschnitt zumindest in einer Axialrichtung, vorzugsweise in beide entgegengesetzte Axialrichtungen axial abgestützt oder abstützbar ist. Es kann so auf das das Gewicht erhöhende Axiallager, das-zwischen dem Getriebeelement und dem Getriebegehäuse notwendig wäre, verzichtet werden.

Weiterbildend wird vorgeschlagen, dass die Ausgleichskupplung dafür ausgeführt ist, einen radialen Versatz oder/und einen Winkelversatz zwischen einer Drehachse des Getriebeelements und einer Drehachse der Eingangsseite bzw. Ausgangsseite auszugleichen. So kann trotz auftretender Exzentrizitäten der Drehachsen bzw. trotz auftretender winkeliger Versätze (Schräglagen, Verkippungen) der Drehachsen das Drehmoment über die Ausgleichskupplung übertragen werden.

Vorteilhaft kann die Ausgleichskupplung eine axiale Elastizität aufweisen. So kann beispielsweise erreicht werden, dass axiale Verzwängungen im Falle einer Deformation der Ausgleichskupplung zum Ausgleich eines radialen oder/und winkligen Versatzes vermieden werden.

Besonders bevorzugt ist, dass die Ausgleichskupplung eine Torsionselastizität aufweist. So können vorteilhaft Wellendrehschwingungen oder/und stoßartige Drehmomentbelastungen aufgenommen oder zumindest gemildert werden, ohne dass eine Unterbrechung der Drehmomentübertragung mit Getriebestillstand eintritt, wie dies beispielsweise im Falle des Vorsehens einer herkömmlichen Überlastkupplung in der Art einer Rutschkupplung zu befürchten ist.

Weiterbildend wird vorgeschlagen, dass die Ausgleichskupplung eine Membrankupplungsanordnung, insbesondere Doppel- oder Mehrfach-Membrankupplung mit zwei oder mehreren Membrankupplungselementen, umfasst, die einerseits direkt oder indirekt am Getriebeelement und andererseits direkt oder indirekt an dem vorzugsweise als Flanschabschnitt ausgeführten Ankoppelabschnitt des Stützglieds angebunden ist. Geeignete Membrankupplungsanordnungen sind beispielsweise aus der EP 0 211 090 B1 und der EP 0 462 991 B1 bekannt. Betreffend Membrankupplungsanordnungen mit integrierter Torsionselastizität oder Drehelastizität wird auf die DE 10 2005 014 985 A1 und die inhaltlich dieser entsprechende europäische Patentanmeldung Nr. 06 006 401.1 der Anmelderin verwiesen, deren Erfindungs- und Weiterbildungsvorschläge auf die Membrankupplungsanordnung der Ausgleichskupplung der erfindungsgemäßen Getriebeeinheit vorteilhaft anwendbar sind.

Bevorzugt ist die Membrankupplungsanordnung mit wenigstens einer Drehelastikanordnung ausgeführt, die an einander paarweise zugeordneten Umfangsbereichen der Membrankupplungsanordnung zugfest angebunden ist und sich in Umfangsrichtung verteilt entlang diesen erstreckt, beispielsweise entsprechend den Erfindungs und Weiterbildungsvorschlägen gemäß DE 10 2005 014 985 A1.

Um eine-hohe axiale Elastizität bzw. Weichheit für die Ausgangskupplung zu erreichen, wird für deren Membrankupplungsanordnung vorgeschlagen, dass wenigstens eine oder mehrere der Membranscheiben mit Schwächungsabschnitten, etwa um den Umfang verteilte Radialschlitze, oder/und Radialeinbuchtungen, ausgeführt ist.

In der Regel wird man vorsehen, dass das Stützglied einen vorzugsweise als Flanschabschnitt ausgeführten Ankoppelabschnitt zur Verbindung mit einer anzutreibenden oder antreibenden Maschine aufweist. Nach einer besonders zweckmäßigen Ausgestaltung kann man alternativ vorsehen, dass das Stützglied eine Ankoppelhülse umfasst oder als Ankoppelhülse ausgeführt ist, in die eine Eingangswelle oder Ausgangswelle einer anzutreibenden bzw. antreibenden Maschine eingeführt oder einführbar ist und die mit der Eingangswelle bzw. Ausgangswelle durch Schrumpfpressen zur gemeinsamen Drehung gekoppelt oder koppelbar ist.

Die Ausgleichskupplung ist vorzugsweise einer langsameren von der Eingangsseite und der Ausgangsseite zugeordnet, also der im Betrieb langsamer laufenden Seite von der Eingangsseite und der Ausgangsseite. Dies ist aber nicht zwingend. Das Getriebeelement umfasst vorzugsweise ein Hohlrad der Planetengetriebeanordnung. Dies ist aber nicht zwingend.

Es wird vor allem, aber nicht ausschließlich daran gedacht, dass ein Planetenträger der Planetengetriebeanordnung stationär ist und vorzugsweise einen Abschnitt des Getriebegehäuses bildet. Dabei kann vorteilhaft das Hohrad durch einen Satz von am Planetenradträger drehbar gelagerten Planetenrädern relativ zum Getriebegehäuse drehbar gehalten sein, ohne dass noch ein zwischen dem Hohlrad und dem Getriebegehäuse wirksames und das Gewicht erhöhendes Drehlager erforderlich ist.

Ferner wird in diesem Zusammenhang vorgeschlagen, dass ein Sonnenrad samt einer der Eingangsseite bzw. Ausgangsseite zugehörigen, mit dem Sonnenrad gemeinsam drehbaren Welle oder Nabe durch einen/den Satz von am Planetenradträger drehbar gelagerten Planetenrädern relativ zum Getriebegehäuse drehbar gehalten ist. Es ergeben sich entsprechende Gewichtsvorteile aufgrund des so möglichen Verzichts auf ein zwischen dem Getriebegehäuse und dem Sonnenrad wirksames Drehlager.

Wie schon erwähnt, ist es denkbar, dass sowohl eingangsseitig als auch ausgangsseitig der Getriebeeinheit eine erfindungsgemäße Ausgleichskupplung in diese integriert ist. Demgegenüber ist es aber bevorzugt, dass nur einer von der Eingangsseite und der Ausgangsseite einer Ausgangskupplung entsprechend dem Erfindungsvorschlag zugeordnet ist. Der anderen von Eingangsseite und Ausgangsseite kann aber ebenfalls eine Ausgleichskupplung zugeordnet sein, die vorzugsweise eine Membrankupplungsanordnung, insbesondere Doppel- oder Mehrfach-Membrankupplung mit zwei oder mehreren Membrankupplungselementen, umfasst. Es wird betreffend diese Ausgleichskupplung vor allem (aber nicht ausschließlich) daran gedacht, dass diese nicht integraler strukrureller Bestandteil der Getriebeeinheit ist, so dass durch Wahl einer jeweiligen Ausgleichskupplung eine einfache Anpassung an eine an die Getriebeeinheit anzukoppelnde Maschine möglich ist.

Weiterbildend wird vorgeschlagen, dass die-der anderen von Eingangsseite und Ausgangsseite zugeordnete Ausgleichskupplung einerseits direkt oder indirekt an einem vorzugsweise als Flanschabschnitt ausgeführten Ankoppelabschnitt der mit dem Sonnenrad drehbaren Welle oder Nabe angebunden ist und andererseits einen vorzugsweise als Flanschabschnitt ausgeführten Ankoppelabschnitt zur Verbindung mit einer anzutreibenden oder antreibenden Maschine aufweist.

Die der anderen von Eingangsseite und Ausgangsseite zugeordnete Ausgleichskupplung wird in der Regel zumindest dafür ausgeführt sein, einen radialen Versatz oder/und einen Winkelversatz zwischen einer Drehachse der anderen von Eingangsseite und Ausgangsseite und einer Drehachse eines daran angekoppelten oder ankoppelbaren Eingangs elements oder Ausgangselements einer/der anzutreibenden bzw. antreibenden Maschine auszugleichen.

Nach einer bevorzugten Ausgestaltung ist vorgesehen, dass die der anderen von Eingangsseite und Ausgangsseite zugeordnete Ausgleichskupplung axial steif oder starr ausgeführt ist, insbesondere um ein der anderen von Eingangsseite und Ausgangsseite zugeordnetes Getriebeelement, ggf. das Sonnenrad, axial abzustützen. Auf zusätzliche Axiallager zur Abstützung des Getriebeelements in axialer Richtung kann so verzichtet werden, mit entsprechenden Gewichtsvorteilen.

Die der anderen von Eingangsseite und Ausgangsseite zugeordnete Ausgleichskupplung kann einen Durchgang aufweisen, durch welchen sich ein vorzugsweise als Abstützbuchse ausgeführtes, die Membrankupplungsanordnung der Ausgleichskupplung axial überbrückendes axiales Abstützelement erstreckt. Dieses Abstützelement kann zwischen einer eingangsseitigen bzw. ausgangsseitigen Nabe bzw. Welle der Getriebeeinheit und einer ausgangsseitigen bzw. eingangsseitigen Welle oder dergleichen, der angekoppelten bzw. anzukoppelnden Maschine axial abstützen.

Auch die der anderen von Eingangsseite und Ausgangsseite zugeordnete Ausgleichskupplung kann eine Torsionselastizität aufweisen zur Aufnahme bzw. Milderung von Wellendrehschwingungen oder/und stoßartigen Drehmomentbelastungen. Zu Ausführungsmöglichkeiten der Membrankupplungsanordnung dieser Ausgleichskupplung wird ebenfalls auf die EP 0 211 090 B1 und die EP 0 462 991 B1 sowie - betreffend eine Membrankupplungsanordnung mit integrierter Drehelastizität - die DE 10 2005 014 985 A1 verwiesen.

Es wird vor allem, aber nicht ausschließlich daran gedacht, dass die andere von Eingangsseite und Ausgangsseite die schnellere von der Eingangsseite und der Ausgangsseite ist, also die im Betrieb schneller laufende Seite von der Eingangsseite und der Ausgangsseite.

Anzumerken ist, dass die Axialabstützung von Getriebeelementen nach den vorstehenden Erfindungs- und Weiterbildungsvorschlägen unter Umständen sogar einen Verzicht auf Druckringe zum Ausgleich von axialen Zahnkräften im Falle von Einfach-Schrägverzahnungen ermöglicht, wie sie nach der angesprochenen DE 44 45 413 A1 jeweils nur an einem Verzahnungsende des Sonnenrades und des Hohlrades vorgesehen sind und ansonsten im Stand der Technik häufig an beiden Verzahnungsenden des Sonnen- und Hohlrades vorgesehen sind. Die Konstruktion wird so einfacher und es ergeben sich Gewichtsvorteile.

Wie schon angesprochen, wird insbesondere daran gedacht, dass sich eine Nabe oder/und eine Welle oder/und ein Flansch der Eingangsseite bzw. Ausgangsseite durch den Durchgang der zugeordneten Ausgleichskupplung erstreckt, insbesondere als das bzw. ein Stützglied.

Die Erfindung betrifft ferner eine Kombination aus einer Getriebeeinheit der eingangs angesprochenen Art und einer eingangsseitig oder ausgangsseitig angeordneten Maschine, die vermittels der Getriebeeinheit anzutreiben ist bzw. die dafür vorgesehen ist, vermittels der Getriebeeinheit anzutreiben. Erfindungsgemäß wird vorgeschlagen, dass die Getriebeeinheit vermittels ihres Getriebegehäuses an einem Gehäuse der Maschine angebracht ist und Gewichtskräfte der Getriebeeinheit im Wesentlichen am Gehäuse der Maschine abgestützt sind. Bei der Getriebeeinheit handelt es sich vorzugsweise um eine erfindungsgemäße Getriebeeinheit gemäß den vorangehend angesprochenen Erfindungs- und Weiterbildungsvorschlägen. Die sich durch die Ausgleichskupplung erstreckende Nabe bzw. Welle ist dann mit einer Eingangswelle bzw. Ausgangswelle der Maschine zur gemeinsamen Drehung verbunden.

Vorzugsweise ist die Getriebeeinheit ohne Abstützung durch ein Getriebefundament an dem Gehäuse der Maschine gehalten.

Gemäß einer bevorzugten Ausgestaltung ist vorgesehen, dass die Nabe bzw. Welle und über deren Abstützabschnitt damit das benachbart angeordnete Getriebeelement vermittels der Eingangswelle bzw. Ausgangswelle der Maschine axial abgestützt oder abstützbar ist.

Bereitgestellt wird ferner eine Kombination wie angesprochen, mit einer auf der anderen Seite der Getriebeeinheit vorgesehenen weiteren Maschine, wobei die Maschine vermittels der Getriebeeinheit durch die weitere Maschine antreibbar ist oder die weitere Maschine vermittels der Getriebeeinheit durch die Maschine antreibbar ist.

Die weitere Maschine kann eine Maschine aus der Gruppe Motor (beispielsweise Elektromotor oder Verbrennungsmotor), Turbine (beispielsweise Gasturbine oder Dampfturbine), Verdichter, Pumpe und Generator sein. Die Maschine kann eine Maschine aus der Gruppe Motor (beispielsweise Elektromotor oder Verbrennungsmotor), Turbine (beispielsweise Gasturbine oder Dampfturbine), Verdichter, Pumpe und Generator sein.

Die vorangehend angesprochenen Erfindungs und Weiterbildungsvorschläge ermöglichen insbesondere eine Verkleinerung des Gewichts der Getriebeeinheit durch Verkleinerung von Durchmesser und Länge (kurze Bauweise) sowie Reduzierung von wirksamen Hebelarmlängen, so dass die zu den eingangs angesprochenen Schäden führenden Wirkungen der statischen Gewichtslasten verringert oder sogar vollständig vermieden sind. Durch das Vorsehen von radialem Bewegungsspiel für das über die Ausgleichskupplung mit der Nabe bzw. Welle in Drehmomentübertragungsverbindung stehende Getriebeelement ist eine möglichst exakte Ausrichtung der maßgeblichen Gehäuse- und Drehachsen zueinander während der Montage der Getriebeeinheit an einer Maschine nicht erforderlich, da das Getriebeelement und die Nabe bzw. Welle innerhalb eines gewissen Toleranzbereiches gegeneinander versetzt bzw. verkippte Drehwellen aufweisen können, was dann durch das Radialspiel und die Ausgleichskupplung aufgenommen bzw. ausgeglichen wird. Es wird also ermöglicht, dass einerseits die Drehachse der Nabe bzw. Welle der Drehachse einer Eingangs- bzw. Ausgangswelle der Maschine entspricht und andererseits das Getriebeelement eine hiervon abweichende, sich aus der Montageposition der Getriebeeinheit an der Maschine und den wirksamen statischen Gewichtskräften und dynamischen Kräften ergebende, nicht zwingend streng ortsfeste Drehachse aufweist.

Es sollte darauf hingewiesen werden, dass es nach der Erfindung nicht ausgeschlossen ist, zusätzlich auch noch eine einstellbare Positionierung der Getriebeeinheit an der Maschine vorzusehen, beispielsweise unter Verwendung eines einstellbaren Zwischenflansches nach dem RENK-Ansatz. Man kann in einem solchen Falle vorsehen, dass bei der Montage die Getriebeeinheitsposition nur insoweit grob eingestellt wird, dass ein gewisser Toleranzbereich eingehalten wird, innerhalb dem dann die Anpassung und der Ausgleich durch das Radialspiel des Getriebeelements und die Ausgleichsfunktion der Ausgleichskupplung zuverlässig erfolgen kann.

Die Erfindung wird im Folgenden anhand von in den Figuren gezeigten Ausführungsbeispielen näher erläutert. Es stellen dar:
- Fig. 1: einen Längsschnitt durch eine erste Ausführungsform eines erfindungsgemäßen Stirnräderplanetengetriebes mit feststehendem Planetenträger sowie einem Hohlrad, das über eine doppelgelenkige, drehelastische Membrankupplung mit der Nabe der langsamen Maschinenwelle verbunden ist, und einem an das Maschinengehäuse direkt angeflanschten Getriebegehäuse.
- Fig. 2a, 2b: in Draufsicht zwei Varianten einer nach Fig. 1 zwischen den beiden Membranscheiben der langsamen Membrankupplung radial innen angeordneten Federeinheit, wie aus DE 10 2005 014 985 A1 an sich bekannt.
- Fig. 2c: ein Schnitt durch eine Gehäuse-Längsrippe nach Linie A-A in Fig. 1.
- Fig. 3: einen Längsschnitt durch eine zweite Ausführungsform der langsamen Membrankupplung der Fig. 1 mit axial verlängerter Federeinheit.
- Fig. 4: einen Längsschnitt durch eine dritte Ausführungsform der langsamen Membrankupplung der Fig. 1 mit zwischen den beiden Membranscheiben radial außen angeordneter Federeinheit.
- Fig. 5a, 5b: in axialer Ansicht zwei Varianten von Membranscheiben mit Schwächungsausnehmungen an den radial äußeren Bereichen.

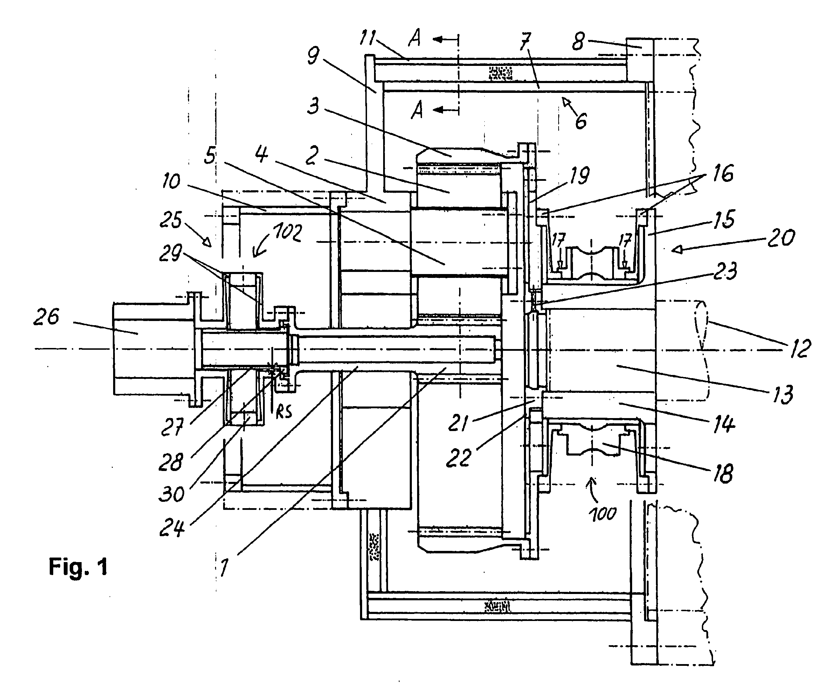

Fig. 1 zeigt ein Stirnräderplanetengetriebe nach der Erfindung, umfassend ein Sonnenrad 1, einen Satz von Planetenrädern 2 (Anzahl je nach Übersetzung typischerweise drei bis sechs) und ein Hohlrad 3. Die Planetenräder 2 sind auf einseitig als Freiträger an dem Planetenträger 4 befestigten Lagerbolzen 5 durch Gleitlager (alternativ Wälzlager) gelagert.

Die Radsatzräder besitzen vorzugsweise eine zur Geräuschreduzierung und für hohe Belastungen modifizierte Geradverzahnung. Alternativ kann auch eine geräuschmäßig bedeutend bessere Einfachschrägverzahnung, gewünschtenfalls mit Druckringen an den Verzahnungsenden für den Ausgleich der axialen Zahnkräfte (etwa nach DE 44 45 413 A1), vorgesehen werden. Weiterhin besteht die Möglichkeit, eine Doppelschrägverzahnung mit entsprechenden Vorteilen vorzusehen.

Fig. 1 zeigt ferner die erfindungsgemäße Ausbildung der langsamen Getriebeseite- mit einem Wellenende 12 der diesseitigen elektrischen maschine und einer am Wellenstumpf 13 durch Schrumpfpressung aufgezogenen Nabe 14 der Getriebeeinheit. Die Drehmomentübertragung zwischen der Maschine und der Getriebeeinheit, genauer zwischen der Maschine und dem Hohlrad, erfolgt über eine als Doppelmembrankupplung 20 mit integrierter Drehelastizität ausgeführte Ausgleichskupplung 100, die die Nabe 14 radial außen umgibt. Je nachdem, ob die Maschine über die Getriebeeinheit angetrieben wird oder ob die Maschine eine weitere Maschine über die Getriebeeinheit eintreibt, kann die Nabe 14 als Eingangselement oder Ausgangselement der Eingangs- bzw. Ausgangsseite der Getriebeeinheit identifiziert werden.

Die Membrankupplung 20 basiert auf den konstruktiven Vorschlägen der DE 10 2005 014 985 A1. Im Gegensatz zu den in den Figuren dieser Offenlegungsschrift gezeigten Ausführungsformen ist bei der Membrankupplung 20 die hier als Federeinheit angesprochene Federanordnung 18 an radial inneren Umfangsbereichen zweier Membranscheiben 16 angebunden, wie dies in der DE 10 2005 014 985 A1 als ebenfalls in Frage kommende Möglichkeit erwähnt ist.

Zur Ankopplung der Membrankupplung 20 an der Nabe 14 weist diese einen Nabenflansch 15 auf, an dem über eine Schraubenverbindung mit über den Umfang verteilten Schrauben der radial äußere Umfang der benachbarten Membranscheibe 16 angebunden ist. Die andere Membranscheibe 16 ist an ihrem radial äußeren Umfangsbereich an einem radial mittleren oder äußeren Bereich einer Scheibe 19 des Hohlrads 3 lösbar angebunden, beispielsweise ebenfalls über eine Schraubenverbindung mit um den Umfang verteilten Schrauben. Zwischen den radial inneren Umfängen der beiden Membranscheiben 16 ist die die Drehelastizität oder Torsionselastizität gebende Federeinheit 18 angeordnet und mit diesen Umfangsbereichen fest verbunden, vorzugsweise stoffschlüssig verbunden, etwa durch Elektronenstrahlschweißen. Es kann sich um eine Federeinheit handeln, wie aus der DE 10 2005 014 985 A1 an sich bekannt und dort als Federanordnung angesprochen,

Die durch die beiden Membranscheiben 16 und die Federeinheit 18 gebildete doppelgelenkige und drehelastische Membrankupplung 20 ist zu der Nabe 14 erfindungsgemäß so angeordnet, dass sie diese entlang ihrer Länge rohrförmig umhüllt. Die Gesamtlänge der Getriebeeinheit wird dadurch gegenüber einer Anordnung axial hintereinander enorm verkürzt.

Die axiale Führung des Hohlrades 3 erfolgt an dem inneren Bereich der Scheibe 19 durch einen mittels Schrauben an der Nabe 14 befestigten Haltering 21. Der Haltering 21 bildet zusammen mit der Nabe 14 eine nach radial außen offene Ringnut, in die die Scheibe 19 mit einem radial inneren Umfangsabschnitt mit Radialspiel eingreift. Der axiale Abstand des Halteringbundes 22 zu der Nabe 14 ist so bemessen, dass die Scheibe 19 gerade so viel axiales Spiel hat, dass die Scheibe 19 innerhalb des ihr gegebenen Radialspiels gut beweglich ist. Es ist also dafür gesorgt, dass das Hohlrad 3 durch die axiale Führung für die Scheibe 19 eine definierte Axialposition einnimmt, die durch die Position der Nabe 14 auf dem Wellenstumpf 13 bestimmt ist. Eine Schmierung der Anlageflächen der Führungsteile kann durch Öleinspritzung in einen Stauraum des Halteringes 21 und durch Bohrungen 23 erfolgen. Alternativ kann auch Lagermaterial z. B. an dem inneren Bereich der Seitenflächen der Scheibe 19 vorgesehen werden.

Ein Getriebegehäuse 6 der Getriebeeinheit gemäß dem Ausführungsbeispiel ist als geschweißte einteilige Stahlkonstruktion, mit der Vorgabe nach kleinem Gewicht und hoher Strukturfestigkeit, konzipiert. Es besteht aus dem rohrförmig ausgebildeten Gehäusemantel 7, mit angeschweißtem, massivem Flansch 8 für den direkten Anbau mittels Zentrierung und Schrauben an das Gehäuse der diesseitigen Maschine. An der Gegenseite befindet sich die mit dem Gehäusemantel 7 verschweißte Gehäusewand 9 und der innen angefügte Planetenträger 4. Die Gehäusewand 9 und der Planetenradträger 4 können auch einteilig ausgeführt sein. An der Gehäusewand 9 kann zudem eine beispielsweise zweiteilige Kupplungsverschalung 10 für eine weitere Ausgleichskupplung 102 auf der schnellen Getriebeseite mittels Zentrierung und Schrauben befestigt sein.

Angemerkt sei, dass die geschweißte einteilige Ausführung des Getriebegehäuses nur eine besonders zweckmäßige Möglichkeit ist. Es bestehen viele Möglichkeiten für die Ausführung des Gehäuses. So könnte beilspielsweise ein mehrteiliges Gehäuse in Gussausführung oder auch als Schweißkonstruktion zum Einsatz kommen, ohne eine vollständige Aufzählung der Ausgestaltungsmöglichkeiten geben zu wollen.

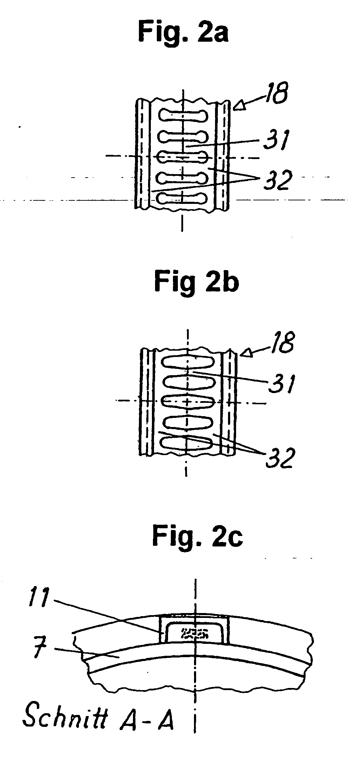

Eine Erhöhung der Biegesteifigkeit des Getriebegehäuses 6 kann durch beispielsweise aus genormtem U-Stahl einfach herstellbare, angeschweißte Längsrippen 11 erreicht werden. Die sich ergebenden Hohlräume der Rippen 11 ermöglichen für die Schallreduzierung eine Befüllung mit Dämpfungsmaterial, siehe Schnitt A-A in Fig. 2c.

Als Alternative für eine weitere Steifigkeitserhöhung und Schallreduzierung kann eine doppelwandige Gehäuseummantellung mit ggf. verkleinerten Wandstärken und Befüllung des Zwischenraumes mit Dämpfungsmaterial, zur Anwendung kommen, wie in Fig. 1 für die untere Gehäusehälfte gezeigt.

Das Getriebe besitzt nicht das üblicherweise vorgesehene, aufwendige Getriebefundament. Dadurch vereinfacht sich auch vor allem durch die fehlenden Gehäusefüße das Getriebegehäuse sehr beachtlich und Baukosten werden eingespart.

Die Fig. 1 zeigt des weiteren die schon angesprochene weitere Ausgleichskupplung 102 an der schnellen Getriebeseite. Die Ausgleichskupplung 102 ist dem Ende der Hohlwelle 24 des Sonnenrades 1 angeflanscht und umfasst eine Doppelmembrankupplung 25 mit integrierter Drehelastizität, etwa entsprechend DE 10 2005 014 985 A1. Die Ausgleichskupplung dient für den Ausgleich von radialen und winkligen Wellenversatz zwischen den Achsen des Sonnenrades 1 und der schnellen Maschine 26.

Es wurde schon angesprochen, dass das Hohlrad 3 durch die Nabe 14 in Verbindung mit dem Haltering 22 axial abgestützt und positioniert ist, wobei die Nabe 14 zusammen mit dem Haltering 22 eine Art Radialführung bilden, die eine radiale Verstellung des Hohlrads 3 innerhalb des gegebenen Radialspiels ermöglicht. Hierdurch wird erreicht, dass Exzentrizitäten zwischen der Drehachse der Welle der angekoppelten Maschine und der Drehachse der Getriebeeinheit beispielsweise in Folge von Verbiegungen durch die statische Last des Getriebegewichts ausgeglichen werden können. Durch die axiale Abstützung in beiden axialen Richtungen wird zusätzlich erreicht, dass auf eine Axiallageranordnung, die zwischen dem Getriebegehäuse und dem Hohlrad wirksam ist, verzichtet werden kann, was die Konstruktion einfach und kostengünstig macht und überdies Gewicht einspart.

Auch betreffend das Sonnenrad kann vorgesehen sein, dass dieses nicht durch Axiallager axial positioniert und abgestützt ist, sondern vermittels der Hohlwelle 24 abgestützt ist. Hierzu kann die Ausgleichskupplung 102 als axial steife oder starre Ausgleichskupplung ausgeführt sein. Hierzu ist beim Ausführungsbeispiel vorgesehen, dass in die Doppelmembrankupplung 25 eine Buchse 27 mit einem nach radial außen vorstehenden Bund 28 aufgenommen ist, über die axiale Stützkräfte zwischen der Drehwelle 26 der schnellen Maschine und der Hohlwelle 24 übertragbar sind. Die in Fig. 1 dem Sonnenrad axial nähere Membranscheibe 29 und ihr radial innen liegender Flanschabschnitt weist gegenüber der Buchse 27 durch die Pfeile RS in Fig. 1 gekennzeichnetes Radialspiel auf, so dass die Doppelmembrankupplung 25 trotz der Buchse 27 radiale und winklige Wellenversätze ausgleichen kann. Der Bund 28 der Buchse 27 ist zwischen dem Flanschabschnitt der Doppelmembrankupplung und einem Flanschabschnitt der Hohlwelle 24 axial gehalten. Am anderen axialen Ende ist die Buchse 27 beispielsweise im Presssitz im Flanschabschnitt der anderen Membranscheibe 29 gehalten oder durch andere Maßnahmen axial abgestützt oder fixiert.

Durch das somit erreichbare Blockieren der Membran-Zusammendrückung wird die Kupplung 25 axial starr und ist somit in der Lage, das ungelagerte Sonnenrad 1 axial zu führen. Thermisch bedingte Längenänderungen der schnellen Welle werden an der Geradverzahnung durch Schieben ausgeglichen.

Vorzugsweise - wie schon angesprochen - ist die Ausgleichskupplung 102 drehelastisch ausgeführt. Hierzu befindet sich zwischen den beiden Membranscheiben 29 eine in Umfangsrichtung federnde Federeinheit 30, etwa entsprechend einer der Ausführungsformen von DE 10 2005 014 985 A1. Durch die Federeinheit können Drehschwingungen und Drehmomentstöße entschärft werden. Je nach Art und Größe der in Betrieb auftretenden Schwingungen und Stöße kann man entscheiden, ob nur eine der beiden Membrankupplungen 20 bzw. 25 oder alle beide mit den Federeinheiten 18 und 30 ausgestattet werden.

Für die im Folgenden angesprochenen Ausführungsbeispiele und Ausführungsvarianten sind für identische oder analoge Komponenten die gleichen Bezugszeichen verwendet, ggf. ergänzt um kleine Buchstaben, die die Ausführungsform bzw. Ausführungsvariante identifizieren. Es werden nur Unterschiede gegenüber der schon erläuterten Ausführungsform erläutert; ansonsten wird ausdrücklich auf die vorangehenden Ausführungen verwiesen.

Fig. 2a und 2b zeigen in der Draufsicht die Federeinheit 18 in zwei aus DE 10 2005 014 985 A1 bekannten Ausführungsvarianten, bei denen die Federabschnitte 31 auf beiden Seiten mit Verbindungsabschnitten 32 verbunden sind, welche jeweils alle Federabschnitte 31 miteinander verbinden.

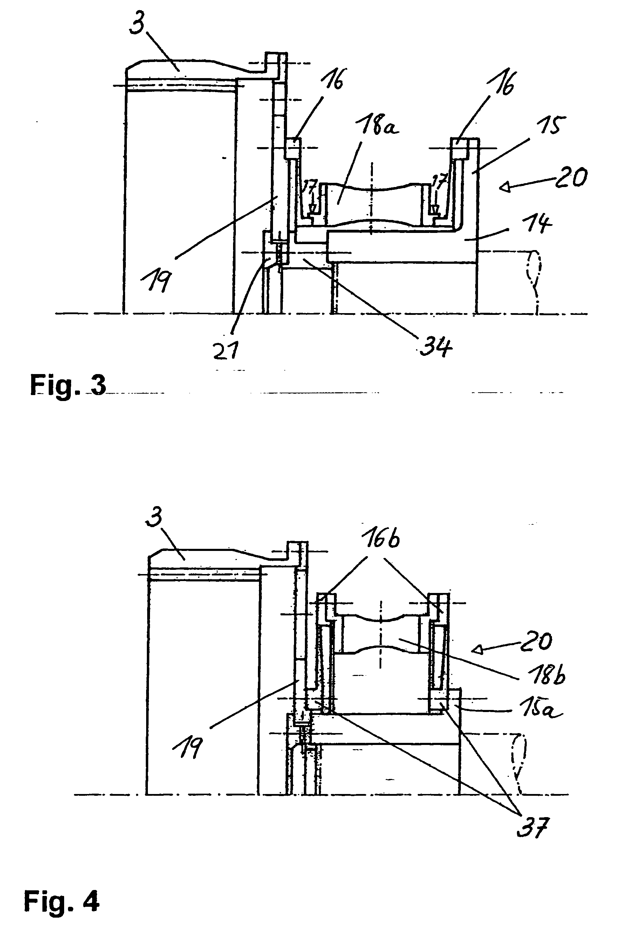

Fig. 3 zeigt als Ausschnitt eine Ausführungsform der langsamen Membrankupplung 20 der Fig. 1, jedoch mit verlängerter Federeinheit 18a, ermöglicht durch einen Zwischenring 34 zwischen der Nabe 14 und dem Haltering 21.

Fig. 4 zeigt als Ausschnitt eine Ausführungsform der langsamen Membrankupplung 20 der Fig. 1, jedoch mit einer an den äußeren Bereichen der zwei identischen Membranscheiben 16b angeordneten Federeinheit 18b, lösbar verbunden einerseits mit der Hohlrad-Scheibe 19 und andererseits mit dem Nabenflasch 15a durch deren zwei radial innere Flansche 37.

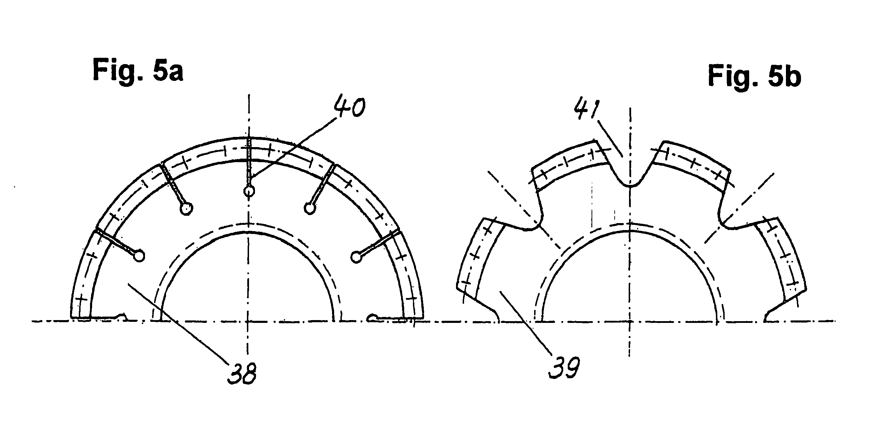

Fig. 5a und 5b zeigen in axialer Ansicht zwei alternative Ausführungsformen der Membranscheiben 38, 39 mit an den äußeren Bereichen für die Erhöhung der Biegeelastizität angeordneten und besonders geformten Schlitzen bzw. Ausnehmungen 40, 41. Diese Ausgestaltungen sind im Prinzip für beide Ausgleichskupplungen anwendbar.

Nach der Erfindung kann an der langsamen Getriebeseite durch die rohrförmige Anordnung- der Membrankupplung 20 entlang der Länge der Nabe 14, eine beachtliche Verkürzung des Getriebegehäuses 6 erreicht werden, die wiederum auch dessen Biegeverformung sehr stark reduziert. So erscheint in der rechnerischen Ermittlung der Gehäusebiegung "f" der Schwerpunktsabstand als Biegelänge "l" sogar in der 3. Potenz (f = G · I³, G = Gewicht) und zeigt dadurch den großen positiven Einfluss dieser Verkürzung.

Die Eliminierung der durch Gehäusebiegung, Exzentrizitäten und dynamische Kräfte entstehenden radialen und winkligen Achsverlagerungen erfolgt vermittels der für derartige Aufgaben besonders vorteilhaft ausgebildeten Membrankupplung 20, durch die mit axialen Abstand zueinander angeordneten Membranscheiben 16 infolge ihrer elastischen Verformbarkeit und ihrer doppelgelenkigen Anordnung.

Bei dem in den Verzahnungen der Planetenräder 2 radial geführten Hohlrad 3 ist neben dem radialen und winkligen Versatzausgleich durch die axial starre aber radial bewegliche Führung mittels Scheibe 19, Haltering 21 und Nabe 14 zudem noch eine radiale Einstellbarkeit des Hohlrades 3 auf gleiche Lastverteilung erreicht. Die elastischen Verformungen der Membranscheiben 16 erfolgen aufgrund deren axialen Elastizität bei kleinen Rückstellkräften und führen somit schon bei kleinen Zahnkräften zur gleichmäßigen Lastverteilung, auch über die Zahnbreite.

Der Achsenversatzausgleich bei dem ungelagerten und in den Verzahnungen der Planetenräder 2 radial geführten Sonnenrad 1 erfolgt ähnlich durch die an dieser Seite angeordnete Doppelmembrankupplung 25.

Für den Ausgleich von besonders großem Achsenversatz kann die elastische Verformbarkeit der Membranscheiben 16 bzw. 29 erfindungsgemäß stark erhöht werden durch zusätzliche an deren äußeren Bereich vorgesehene Ausnehmungen 40, 41, entsprechend Fig. 5a oder Fig. 5b.

Die in der Praxis gestellte Forderung nach einfacher Getriebemontage und Inspektion wird erfüllt im Wesentlichen durch die Lagerung der Planetenräder 2 auf einseitig im Planetenträger 4 befestigten Lagerbolzen 5. Diese Teile bilden gemeinsam mit dem Getriebegehäuse 6 eine Baugruppe, die als Einheit in das bereits über die Scheibe 19 und Membrankupplung 20 mit der Maschinenwelle 12 verbundene Hohlrad 3 eingeschoben werden kann. Die aus dem Sonnenrad 1 und der Doppelmembrankupplung 25 gebildete weitere Baugruppe kann ebenfalls als Einheit in die Verzahnungen der Planetenräder 2 gesteckt werden.

Der Ausbau des Sonnenrades 1 allein ist zudem möglich, ohne dass außer der Doppelmembrankupplung 25 weitere Teile demontiert werden müssen. So erlaubt nach dem Kupplungsausbau der freigewordene Raum das axiale Herausziehen des Sonnenrades 1 aus den Planetenradzähnen.

Die Lagerung der Planetenräder 2 auf einseitig befestigten Lagerbolzen 5 vermeidet vorteilhaft die bekannterweise sonst notwendige Käfigkonstruktion des Planetenträgers 4 mit zwei Seitenscheiben und den Verbindungsstegen. Dadurch kann das im Inneren des Radsatzes sich sammelnde heiße Schmieröl unbehindert seitlich austreten und durch kleinere Öl-Planschverluste die Verlustleistung beachtlich reduzieren. Diese Wirkungsgraderhöhung wird noch dadurch vergrößert, dass außer den Planetenradlagern keine weiteren Wellenlager vorhanden sind. So ist das Sonnenrad 1 ungelagert, nur in den Verzahnungen der Planetenräder 2 radial geführt, und ist die Hohlrad-Baugruppe ebenfalls ohne eigenes Lager in den Verzahnungen der Planetenräder 2 radial geführt und vermittels der Nabe 14 direkt auf der Maschinenwelle 12 angeordnet. Weniger Lager ergeben den erwünschten kleinen Ölbedarf.

Die Reduzierung der Geräuschemission kann erreicht werden durch eine geräuschminimierte Sondergeradverzahnung oder eine geräuschmäßig noch bessere Einfachschrägverzahnung, ggf. mit Druckringen für den Axialkraftausgleich. Weitere sekundäre Luft- und Körperschallabsenkungen lassen sich durch die folgenden Konstruktionsmerkmale des Getriebegehäuses 6 erreichen:
- rohrförmiger Geäusemantel 7 (Fig. 1),
- U-förmige Längsrippen 11 (Fig. 2c, Schnitt A-A), mit Dämpfungsmaterial gefüllt,
- doppelwandige mit Dämpfungsmaterial gefüllte Gehäuseummantelung (Fig. 1, untere Gehäusehälfte).

Eine besonders einfache und sichere Überwachung der Planetenradlagertemperatur ermöglicht der feststehende Planetenträger 4 mit dem Einbau von gut zugänglichen Temperaturgebern (nicht dargestellt) direkt in die Lagerbolzen 5, vorzugsweise unmittelbar in deren Lastzone.

Als Überlastungsschutz sind die in den Membrankupplungen 20 bzw. 25 angeordneten Federeinheiten 18 bzw. 30 vorgesehen. Diese sind geeignet, Wellendrehschwingungen oder/und stoßartige Drehmomentbelastungen aufzunehmen bzw. zu mildern, ohne dass eine Unterbrechung des Drehmomentes mit Getriebestillstand eintritt.

Auf Grundlage der Erfindungs- und Weiterbildungsvorschläge und speziell der speziellen Lösungen der in den Figuren gezeigten Ausführungsbeispiele lassen sich unter anderem die folgenden Vorteile erreichen:
- einfache Montage und Inspektion der Getriebeeinheit,
- vergleichsweise niedrige Verlustleistung durch Erzielung eines vergleichsweise guten Wirkungsgrads,
- vergleichsweise kleiner Ölverbrauch,
- niedrige Geräuschemission,
- einfache und zuverlässige Überwachung der Planetenradlagertemperatur,
- Überlastungsschutz, insbesondere betreffend Wellendrehschwingungen und stoßartige Drehmomentbelastungen.

## Patentansprüche

1. Getriebeeinheit, umfassend eine relativ zu einem Getriebegehäuse (7, 9) drehbar gehaltene oder gelagerte Eingangsseite und eine relativ zum Getriebegehäuse drehbar gehaltene oder gelagerte Ausgangsseite und eine in dem Getriebegehäuse angeordnete Getriebeanordnung, insbesondere Planetengetriebeanordnung (1, 2, 3, 4), die wenigstens einen untersetzenden oder übersetzenden Drehmomentübertragungspfad zwischen der Eingangsseite und der Ausgangsseite bereitstellt, wobei wenigstens einer von der Eingangsseite und der Ausgangsseite eine Ausgleichskupplung (100) zugeordnet ist zumindest zum Ausgleich von radialem oder/und winkeligem oder/und axialem Versatz;
**dadurch gekennzeichnet,**
**dass** wenigstens ein Stützglied (14) der Eingangsseite bzw. Ausgangsseite sich durch einen Durchgang der zugeordneten Ausgleichskupplung (100) erstreckt und ein im Drehmomentübertragungspfad liegendes, relativ zum Getriebegehäuse drehbar gehaltenes oder gelagertes Getriebeelement (3) der Getriebeanordnung an einem benachbart im Getriebegehäuse angeordneten Abstützabschnitt des Stützglieds (14) abgestützt oder abstützbar ist und über die Ausgleichskupplung mit einem gegenüber dem Abstützabschnitt axial beabstandeten Ankoppelabschnitt des Stützglieds in Drehmomentübertragungsverbindung steht.

2. Getriebeeinheit nach Anspruch 1, **dadurch gekennzeichnet, dass** das Getriebeelement (3) Bewegungsspiel, vorzugsweise radiales Bewegungsspiel, relativ zum Abstützabschnitt aufweist.

3. Getriebeeinheit nach Anspruch 1 oder 2, **dadurch gekennzeichnet, dass** das Getriebeelement (3) für eine definierte axiale Positionierung am Abstützabschnitt zumindest in einer Axialrichtung, vorzugsweise in beide entgegengesetzte Axialrichtungen axial abgestützt oder abstützbar ist.

4. Getriebeeinheit nach einem der Ansprüche 1 bis 3, **dadurch gekennzeichnet, dass** die Ausgleichskupplung (100) dafür ausgeführt ist, einen radialen Versatz oder/und einen Winkelversatz zwischen einer Drehachse des Getriebeelements (3) und einer Drehachse der Eingangsseite bzw. Ausgangsseite auszugleichen.

5. Getriebeeinheit nach einem der Ansprüche 1 bis 4, **dadurch gekennzeichnet, dass** die Ausgleichskupplung (100) eine axiale Elastizität aufweist.

6. Getriebeeinheit nach einem der Ansprüche 1 bis 5, **dadurch gekennzeichnet, dass** die Ausgleichskupplung (100) eine Torsionselastizität aufweist.

7. Getriebeeinheit nach einem der Ansprüche 1 bis 5, **dadurch gekennzeichnet, dass** die Ausgleichskupplung eine Membrankupplungsanordnung (20), insbesondere Doppel- oder Mehrfach-Membrankupplung (20) mit zwei oder mehreren Membrankupplungselementen (16), umfasst, die einerseits direkt oder indirekt am Getriebeelement (3) und andererseits direkt oder indirekt an dem vorzugsweise als Flanschabschnitt (15) ausgeführten Ankoppelabschnitt des Stützglieds (14) angebunden ist.

8. Getriebeeinheit nach Anspruch 6 und 7, **dadurch gekennzeichnet, dass** die Membrankupplungsanordnung (20) mit wenigstens einer Drehelastikanordnung (18) ausgeführt ist, die an einander paarweise zugeordneten Umfangsbereichen der Membrankupplungsanordnung zugfest angebunden ist und sich in Umfangsrichtung verteilt entlang diesen erstreckt.

9. Getriebeeinheit nach einem der Ansprüche 1 bis 8, **dadurch gekennzeichnet, dass** das Stützglied einen vorzugsweise als Flanschabschnitt ausgeführten Ankoppelabschnitt zur Verbindung mit einer anzutreibenden oder antreibenden Maschine aufweist.

10. Getriebeeinheit nach einem der Ansprüche 1 bis 8, **dadurch gekennzeichnet, dass** das Stützglied (14) eine Ankoppelhülse umfasst oder als Ankoppelhülse ausgeführt ist, in die eine Eingangswelle (13) oder Ausgangswelle (13) einer anzutreibenden bzw. antreibenden Maschine eingeführt oder einführbar ist und die mit der Eingangswelle bzw. Ausgangswelle durch Schrumpfpressen zur gemeinsamen Drehung gekoppelt oder koppelbar ist.

11. Getriebeeinheit nach einem der Ansprüche 1 bis 10, **dadurch gekennzeichnet, dass** die Ausgleichskupplung (100) einer langsameren von der Eingangsseite und der Ausgangsseite zugeordnet ist.

12. Getriebeeinheit nach einem der Ansprüche 1 bis 11, **dadurch gekennzeichnet, dass** das Getriebeelement ein Hohlrad (3) der Planetengetriebeanordnung umfasst.

13. Getriebe einheit nach einem der Ansprüche 1 bis 11, **dadurch gekennzeichnet, dass** ein Planetenradträger (4) der Planetengetriebeanordnung stationär ist und vorzugsweise einen Abschnitt des Getriebegehäuses (7, 9) bildet.

14. Getriebeeinheit nach Anspruch 13, **dadurch gekennzeichnet, dass** das Hohlrad (3) durch einen Satz von am Planetenradträger (4) drehbar gelagerten Planetenrädern (2) relativ zum Getriebegehäuse (7, 9) drehbar gehalten ist.

15. Getriebeeinheit nach Anspruch 13 oder 14, **dadurch gekennzeichnet, dass** ein Sonnenrad (1) samt einer der Eingangsseite bzw. Ausgangsseite zugehörigen, mit dem Sonnenrad gemeinsam drehbaren Welle (24) oder Nabe durch einen/den Satz von am Planetenradträger (4) drehbar gelagerten Planetenrädern (2) relativ zum Getriebegehäuse (7, 9) drehbar gehalten ist.

16. Getriebeeinheit nach einem der Ansprüche 1 bis 15, **dadurch gekennzeichnet, dass** der anderen von Eingangsseite und Ausgangsseite eine Ausgleichskupplung (102) zugeordnete ist, die vorzugsweise eine Membrankupplungsanordnung (25), insbesondere Doppel- oder Mehrfach-Membrankupplung (25) mit zwei oder mehreren Membrankupplungselementen (29), umfasst.

17. Getriebeeinheit nach Anspruch 15 und 16, **dadurch gekennzeichnet, dass** die der anderen von Eingangsseite und Ausgangsseite zugeordnete Ausgleichskupplung (102) einerseits direkt oder indirekt an einem vorzugsweise als Flanschabschnitt ausgeführten Ankoppelabschnitt der mit dem Sonnenrad (1) drehbaren Welle (24) oder Nabe angebunden ist und andererseits einen vorzugsweise als Flanschabschnitt ausgeführten Ankoppelabschnitt zur Verbindung mit einer anzutreibenden oder antreibenden Maschine aufweist.

18. Getriebeeinheit nach Anspruch 16 oder 17, **dadurch gekennzeichnet**, das die der anderen von Eingangsseite und Ausgangsseite zugeordnete Ausgleichskupplung (102) dafür ausgeführt ist, einen radialen Versatz oder/und einen Winkelversatz zwischen einer Drehachse der anderen von Eingangsseite und Ausgangsseite und einer Drehachse eines daran angekoppelten oder ankoppelbaren Eingangselements oder Ausgangselements einer/der anzutreibenden bzw. antreibenden Maschine auszugleichen.

19. Getriebeeinheit nach einem der Anspruch 16 bis 18, **dadurch gekennzeichnet, dass** die der anderen von Eingangsseite und Ausgangsseite zugeordnete Ausgleichskupplung (102) axial steif oder starr ausgeführt ist, insbesondere um ein der anderen von Eingangsseite und Ausgangsseite zugeordnetes Getriebeelement, ggf. das Sonnenrad, axial abzustützen.

20. Getriebeeinheit nach Anspruch 19, dass die der anderen von Eingangsseite und Ausgangsseite zugeordnete Ausgleichskupplung (102) einen Durchgang aufweist, durch welchen sich ein vorzugsweise als Abstützbuchse ausgeführtes, die Membrankupplungsanordnung (25) axial überbrückendes axiales Abstützelement (27) erstreckt.

21. Getriebeeinheit nach einem der Ansprüche 16 bis 20, **dadurch gekennzeichnet, dass** die der anderen von Eingangsseite und Ausgangsseite zugeordnete Ausgleichskupplung (102) eine Torsionselastizität aufweist.

22. Getriebeeinheit nach einem der Ansprüche 16 bis 21, **dadurch gekennzeichnet, dass** die andere von Eingangsseite und Ausgangsseite die schnellere von der Eingangsseite und der Ausgangsseite ist.

23. Getriebeeinheit nach einem der Ansprüche 1 bis 22, **dadurch gekennzeichnet, dass** sich eine Nabe (14) oder/und eine Welle oder/und ein Flansch der Eingangsseite bzw. Ausgangsseite durch den Durchgang der zugeordneten Ausgleichskupplung (100) erstreckt, insbesondere als das bzw. ein Stützglied (14).

24. Kombination aus einer Getriebeeinheit nach einem der vorhergehenden Ansprüche und einer ausgangsseitig oder eingangsseitig angeordneten Maschine, die vermittels der Getriebeeinheit anzutreiben ist bzw. die dafür vorgesehen ist,
vermittels der Getriebeeinheit anzutreiben,
**dadurch gekennzeichnet,**
**dass** die Getriebeeinheit vermittels ihres Getriebegehäuses (7, 9) an einem Gehäuse der Maschine angebracht ist und Gewichtskräfte der Getriebeeinheit im Wesentlichen am Gehäuse der Maschine abgestützt sind und dass das sich durch die Ausgleichskupplung erstreckende Stützglied (14) mit einer Eingangswelle bzw. Ausgangswelle der Maschine zur gemeinsamen Drehung verbunden ist.

25. Kombination nach Anspruch 24, **dadurch gekennzeichnet, dass** die Getriebeeinheit ohne Abstützung durch ein Getriebefundament an dem Gehäuse der Maschine gehalten ist.

26. Kombination nach Anspruch 24 oder 25, **dadurch gekennzeichnet, dass** das Stützglied (14) und über dessen Abstützabschnitt damit das benachbart angeordnete Getriebeelement (3) vermittels der Eingangswelle (13) bzw. Ausgangswelle (13) der Maschine axial abgestützt oder abstützbar ist.

27. Kombination nach einem der Ansprüche 24 bis 26, mit einer auf der anderen Seite der Getriebeeinheit vorgesehenen weiteren Maschine, wobei die Maschine vermittels der Getriebeeinheit durch die weitere Maschine antreibbar ist oder die weitere Maschine vermittels der Getriebeeinheit durch die Maschine antreibbar ist.

28. Kombination nach Anspruch 27, **dadurch gekennzeichnet, dass** die weitere Maschine eine Maschine aus der Gruppe Motor, Turbine, Verdichter, Pumpe und Generator ist.

29. Kombination nach einem der Ansprüche 24 bis 28, **dadurch gekennzeichnet, dass** die Maschine eine Maschine aus der Gruppe Motor, Turbine, Verdichter, Pumpe und Generator ist.

## Claims

1. Gear unit, comprising an input side secured or mounted rotatably relative to a gear housing (7, 9) and an output side secured or mounted rotatably relative to the gear housing and a gear arrangement arranged in the gear housing, in particular a planetary gear arrangement (1, 2, 3,4), which provides at least one reducing or translating torque transmission path between the input side and the output side, wherein a self-aligning coupling (100) is assigned to at least one of the input and the output side, at least for balancing out radial and/or angular and/or axial offset:
**characterised in that**
at least one support member (14) of the input side or output side extends through a passage of the associated self-aligning coupling (100) and a gear element (3) of the gear arrangement which lies in the torque transmission path and is secured or mounted rotatably relative to the gear housing is supported or can be supported on a support section of the support member (14) arranged adjacently in the gear housing and by means of the self-aligning coupling is in torque-transmission connection with a coupling section of the support member spaced apart axially from the support section.

2. Gear unit according to claim 1, **characterised in that** the gear element (3) has movement clearance, preferably radial movement clearance, relative to the support section.

3. Gear unit according to claim 1 or 2, **characterised in that** the gear element (3) is axially supported or supportable for defined axial positioning on the support section at least in one axial direction, preferably in both opposite axial directions.

4. Gear unit according to any one of claims 1 to 3, **characterised in that** the self-aligning coupling (100) is designed to balance out a radial offset and/or angular offset between a rotary axis of the gear element (3) and a rotary axis of the input side or output side.

5. Gear unit according to any one of claims 1 to 4, **characterised in that** the self-aligning coupling (100) has axial elasticity.

6. Gear unit according to any one of claims 1 to 5, **characterised** it that the self-aligning coupling (100) has torsional elasticity.

7. Gear unit according to any one of claims 1 to 5, **characterised in that** the self-aligning coupling comprises a membrane coupling arrangement (20), in particular a double or multiple membrane coupling (20) with two or more membrane coupling elements (16), which is connected on the one hand directly or indirectly to the gear element (3) and on the other hand directly or indirectly to the coupling section of the support member (14) preferably designed as a flange section (15).

8. Gear unit according to claim 6 and 7, **characterised in that** the membrane coupling arrangement (20) is designed to have at least one rotational elastic arrangement (18), which is connected in a tension-resistant manner to circumferential sections of the membrane coupling arrangement assigned to one another in pairs and extends along the latter distributed in circumferential direction.

9. Gear unit according to any one of claims 1 to 8, **characterised in that** the support member comprises a coupling section preferably designed as a flange section for connecting to a machine to be driven or driving machine.

10. Gear unit according to any one of claims 1 to 8, **characterised in that** the support member (14) comprises a coupling sleeve or is designed as a coupling sleeve, into which an input shaft (13) or output shaft (13) of a machine to be driven or driving machine is inserted or is insertable and which is coupled or can be coupled to the input shaft or output shaft by shrink pressing for joint rotation.

11. Gear unit according to any one of claims 1 to 10, **characterised in that** the self-aligning coupling (100) is assigned to the slower of the input side and the output side.

12. Gear unit according to any one of claims 1 to 11, **characterised in that** the gear element comprises a ring gear (3) of the planetary gear arrangement.

13. Gear unit according to any one of claims 1 to 11, **characterised in that** a planetary gear support (4) of the planetary gear arrangement is stationary and preferably forms a section of the gear housing (7, 9).

14. Gear unit according to claim 13, **characterised in that** the ring gear (3) is secured rotatably by a set of planetary gears (2) mounted rotatably on the planetary gear support (4) relative to the gear housing (7, 9).

15. Gear unit according to claim 13 or 14, **characterised in that** a sun gear (1) together with a shaft (24) or hub, which belongs to the input side or output side and is rotatable together with the sun gear, is secured rotatably by a/the set of planetary gears (2) mounted rotatably on the planetary gear support (4) relative to the gear housing (7, 9).

16. Gear unit according to any one of claims 1 to 15, **characterised in that** a self-aligning coupling (102) is assigned to the other of the input side and output side, which preferably comprises a membrane coupling arrangement (25), in particular a double or multiple membrane coupling (25) with two or more membrane coupling elements (29).

17. Gear unit according to claim 15 and 16, **characterised in that** the self-aligning coupling (102) assigned to the other of the input side and output side is connected on the one hand directly or indirectly to a coupling section preferably designed as a flange section of the shaft (24) rotatable with the sun gear (1), and on the other hand comprises a coupling section designed preferably as a flange section for connecting to a machine to be driven or driving machine.

18. Gear unit according to claim 16 or 17, **characterised in that** the self-aligning coupling (102) assigned to the other of the input side and output side is designed to balance out a radial offset and/or angular offset between a rotary axis of the other of the input side and output side and a rotary axis of an input element or output element coupled or couplable thereto of a/the machine to be driven or driving machine.

19. Gear unit according to any one of claims 16 to 18, **characterised in that** the self-aligning coupling (102) assigned to the other of the input side and output side is designed to be axially stiff or rigid, in particular in order to support axially a gear element, possibly the sun gear, assigned to the other of the input side and output side.

20. Gear unit according to claim 19, **characterised in that** the self-aligning coupling (102) assigned to the other of the input side and output side has a passage, through which an axial support element (27) extends, which is designed preferably as a support bush and axially bridges the membrane coupling arrangement (25).

21. Gear unit according to any one of claims 16 to 20, **characterised in** the self-aligning coupling (102) assigned to the other of the input side and output side has torsional elasticity.

22. Gear unit according to any one of claims 16 to 21, **characterised in that** the other of the input side and output side is the more rapid of the input side and the output side.

23. Gear unit according to any one of claims 1 to 22, **characterised in that** a hub (14) and/or a shaft and/or a flange of the input side or output side extends through the passage of the assigned self-aligning coupling (100), in particular as the or a support member (14).

24. Combination of a gear unit according to any one of the preceding claims and a machine arranged on the output side or input side, which is to be driven by means of the gear unit or which is provided for driving by means of the gear unit,
**characterised in that**
the gear unit is attached by means of its gear housing (7, 9) to a housing of the machine and weight forces of the gear unit are supported essentially on the housing of the machine, and **in that** the support member (14) extending through the self-aligning coupling is connected to an input shaft or output shaft of the machine for joint rotation.

25. Combination according to claim 24, **characterised in that** the gear unit is held without support by a gear foundation on the housing of the machine.

26. Combination according to claim 24 or 25, **characterised in that** the support member (14) and by means of its support section thereby the adjacent gear element (3) is supported or can be supported axially by means of the input shaft (13) or output shaft (13) of the machine.

27. Combination according to any one of claims 24 to 26, with an additional machine provided on the other side of the gear unit, wherein the machine can be driven by the gear unit by the additional machine or the additional machine can be driven by means of the gear unit by the machine.

28. Combination according to claim 27, **characterised in that** the additional machine is a machine selected from a group comprising a motor, turbine compressor, pump and generator.

29. Combination according to any one of claims 24 to 28, **characterised in that** the machine is a machine selected from a group comprising a motor, turbine, compressor, pump and generator.

## Revendications

1. Unité d'engrenage, comportant un côté d'entrée maintenu ou logé de manière à pouvoir tourner par rapport au boîtier d'engrenages (7, 9) et un côté de sortie maintenu ou logé de manière à pouvoir tourner par rapport au boîtier d'engrenages et un agencement d'engrenages disposé dans le boîtier d'engrenages, en particulier un agencement de train épicycloïdal (1, 2, 3, 4), lequel fournit entre le côté d'entrée et le côté de sortie, au moins un chemin de transmission de couple démultipliant ou multipliant, sachant qu'un accouplement compensateur (100) est associé au moins à l'un des côtés parmi le côté d'entrée et le côté de sortie, lequel accouplement compensateur est destiné à compenser le décalage radial et/ou angulaire et/ou axial ;
**caractérisée en ce**
**qu'**au moins un membre de support (14) du côté d'entrée ou du côté de sortie s'étend à travers un passage de l'accouplement compensateur (100) associé, et en ce qu'un élément d'engrenage (3) de l'agencement d'engrenages, se trouvant sur le chemin de transmission du couple, maintenu ou logé de manière à pouvoir tourner par rapport au boîtier d'engrenages s'appuie ou peut s'appuyer sur une section d'appui du membre de support (14), disposée à proximité dans le boîtier d'engrenages et se trouve en liaison de transmission de couple avec une section d'accouplement du membre de support, espacée axialement par rapport à la section d'appui, par l'intermédiaire de l'accouplement compensateur.

2. Unité d'engrenage selon la revendication 1, **caractérisée en ce que** l'élément d'engrenage (3) présente un jeu de déplacement, de préférence un jeu de déplacement radial, par rapport à la section d'appui.

3. Unité d'engrenage selon la revendication 1 ou 2, **caractérisée en ce que** l'élément d'engrenage (3) s'appuie ou est susceptible de s'appuyer axialement au moins dans une direction axiale, de préférence dans deux directions axiales opposées, sur la section d'appui pour un positionnement axial défini.

4. Unité d'engrenage selon l'une quelconque des revendications 1 à 3, **caractérisée en ce que** l'accouplement compensateur (100) est réalisé pour compenser un décalage radial et/ou un décalage angulaire entre un axe de rotation de l'élément d'engrenage (3) et un axe de rotation du côté d'entrée, respectivement du côté de sortie.

5. Unité d'engrenage selon l'une quelconque des revendications 1 à 4, **caractérisée en ce que** l'accouplement compensateur (100) présente une élasticité axiale.

6. Unité d'engrenage selon l'une quelconque des revendications 1 à 5, **caractérisée en ce que** l'accouplement compensateur (100) présente une élasticité de torsion.

7. Unité d'engrenage selon au moins l'une quelconque des revendications 1 à 5, **caractérisée en ce que** l'accouplement compensateur comporte un agencement d'accouplement à membrane (20) en particulier un agencement à membrane double ou multiple (20) avec deux éléments d'accouplement à membrane (16) ou plus, lequel est lié d'un côté directement ou indirectement à l'élément d'engrenage (3) et de l'autre côté directement ou indirectement à la section d'accouplement du membre d'appui (14), réalisée de préférence comme une section de bride (15).

8. Unité d'engrenage selon la revendication 6 ou 7, **caractérisée en ce que** l'agencement d'accouplement à membrane (20) est réalisé avec au moins un agencement élastique à torsion (18) qui est lié de manière résistante à la traction à des zones périphériques de l'agencement d'accouplement à membrane, associées les unes aux autres par paire et qui s'étend de manière répartie dans la direction périphérique le long de ces dernières.

9. Unité d'engrenage selon l'une quelconque des revendications 1 à 8, **caractérisée en ce que** le membre d'appui présente une section d'accouplement réalisée de préférence comme une section de bride, destinée à la liaison avec une machine à actionner ou actionnant.

10. Unité d'engrenage selon au moins l'une quelconque des revendications 1 à 8, **caractérisée en ce que** le membre d'appui (14) comporte un manchon d'accouplement ou est réalisé comme un manchon d'accouplement, dans lequel un arbre d'entrée (13) ou un arbre de sortie (13) d'une machine à actionner ou actionnant est introduit ou est susceptible d'y être introduit, et qui est couplé ou peut être couplé pour une rotation commune à l'arbre d'entrée ou à l'arbre de sortie par pression de retrait.

11. Unité d'engrenage selon au moins l'une quelconque des revendications 1 à 10, **caractérisée en ce que** l'accouplement compensateur (100) est associé à un côté le plus lent parmi les côtés d'entrée et de sortie.

12. Unité d'engrenage selon au moins l'une quelconque des revendications 1 à 11, **caractérisée en ce que** l'élément d'engrenage comporte une roue à denture intérieure (3) de l'agencement de train épicycloïdal.

13. Unité d'engrenage selon au moins l'une quelconque des revendications 1 à 11, **caractérisée en ce qu'**un porte satellite (4) de l'agencement de train épicycloïdal est stationnaire, et forme de préférence une section du boîtier d'engrenages (7, 9).

14. Unité d'engrenage selon la revendication 13, **caractérisée en ce que** la roue à denture intérieure (3) est maintenue de manière à pouvoir tourner par rapport au boîtier d'engrenages (7, 9) par un jeu de roues satellites (2) logées de manière à pouvoir tourner au niveau du porte satellite (4).

15. Unité d'engrenage selon la revendication 13 ou 14, **caractérisée en ce qu'**un planétaire (1) avec un arbre (24) ou un moyeu associé au côté d'entrée ou au côté de sortie, et pouvant tourner ensemble avec le planétaire est maintenu de manière à pouvoir tourner par rapport au boîtier d'engrenages (7, 9) grâce à un/au jeu de roues satellites (2) logées de manière à pouvoir tourner sur le porte satellite (4).

16. Unité d'engrenage selon l'une quelconque des revendications 1 à 15, **caractérisée en ce qu'**un accouplement compensateur (102) est associé à l'autre côté parmi le côté d'entrée et le côté de sortie, lequel comporte de préférence un agencement d'accouplement à membrane (25), en particulier un agencement d'accouplement à membrane (25) double ou multiple avec deux éléments d'accouplement à membrane (29) ou plus.

17. Unité d'engrenage selon les revendications 15 et 16, **caractérisée en ce que** l'accouplement compensateur (102) associé à l'autre parmi le côté d'entrée et le côté de sortie est lié d'un côté directement ou indirectement à une section d'accouplement de l'arbre (24) ou du moyeu pouvant tourner avec la roue planétaire (1), réalisée de préférence comme une section de bride et présente de l'autre côté une section d'accouplement réalisée de préférence comme une section de bride et destinée à la liaison avec une machine à actionner ou actionnant.

18. Unité d'engrenage selon la revendication 16 ou 17, **caractérisée en ce que** l'accouplement compensateur (102) associé à l'autre parmi les côtés d'entrée et de sortie est réalisé pour compenser un décalage radial et/ou un décalage angulaire entre un axe de rotation de l'autre parmi les côtés d'entrée et de sortie et un axe de rotation d'un élément d'entrée ou d'un élément de sortie couplé ou pouvant être couplé à ce dernier, d'une machine à actionner ou actionnant.

19. Unité d'engrenage selon au moins l'une quelconque des revendications 16 à 18, **caractérisée en ce que** l'accouplement compensateur (102) associé à l'autre côté parmi les côtés d'entrée et de sortie est réalisé de manière souple axialement ou de manière rigide, et s'appui axialement en particulier autour d'un élément d'engrenage, éventuellement le planétaire, associé à l'autre côté parmi les côtés d'entrée et de sortie.

20. Unité d'engrenage selon la revendication 19, **caractérisée en ce que** l'accouplement compensateur (102) associé à l'autre côté parmi les côtés d'entrée et de sortie présente un passage, à travers lequel s'étend un élément d'appui (27) axial, réalisé de préférence comme une douille d'appui surmontant axialement l'agencement d'accouplement à membrane (25).

21. Unité d'engrenage selon l'une quelconque des revendications 16 à 20, **caractérisée en ce que** l'accouplement compensateur (102) associé à l'autre côté parmi le côté d'entrée et le côté de sortie présente une élasticité de torsion.

22. Unité d'engrenage selon l'une quelconque des revendications 16 à 21, **caractérisée en ce que** l'autre côté parmi les côtés d'entrée et de sortie est le côté le plus rapide parmi le côté d'entrée et le côté de sortie.

23. Unité d'engrenage selon l'une quelconque des revendications 1 à 22, **caractérisée en ce qu'**un moyeu (14) et/ou un arbre et/ou une bride du côté d'entrée ou du côté de sortie s'étendent à travers le passage de l'accouplement compensateur (100) associé, en particulier en tant que le ou un membre d'appui (14).

24. Combinaison d'une unité d'engrenage selon l'une quelconque des revendications précédentes, et d'une machine disposée côté sortie ou côté entrée, laquelle est à actionner au moyen de l'unité d'engrenage ou qui est prévue pour l'actionnement au moyen de l'unité d'engrenage,
**caractérisée en ce**
**que** l'unité d'engrenage est posée sur un boîtier de la machine au moyen de son boîtier d'engrenages (7, 9), en ce que les poids de l'unité d'engrenage sont appuyés essentiellement sur le boîtier de la machine, et en ce que le membre d'appui (14) s'étendant à travers l'accouplement compensateur est relié à un arbre d'entrée ou à un arbre de sortie de la machine pour une rotation commune.

25. Combinaison selon la revendication 24, **caractérisée en ce que** l'unité d'engrenage est maintenue sans support par une base d'engrenage sur le boîtier de la machine.

26. Combinaison selon la revendication 24 ou 25, **caractérisée en ce que** l'élément d'engrenage (3) disposé à proximité s'appuie ou peut s'appuyer axialement sur le membre de d'appui (14) ou sur sa section de support au moyen de l'arbre d'entrée (13) ou de l'arbre de sortie (13) de la machine.

27. Combinaison selon l'une quelconque des revendications 24 à 26, comportant une autre machine prévue sur l'autre côté de l'unité d'engrenage, sachant que la machine peut être actionnée par l'autre machine au moyen de l'unité d'engrenage ou que l'autre machine peut être actionnée par la machine au moyen de l'unité d'engrenage.

28. Combinaison selon la revendication 27, **caractérisée en ce que** l'autre machine est une machine choisie parmi le groupe comportant un moteur, une turbine, un compresseur, une pompe et un générateur.

29. Combinaison selon l'une quelconque des revendications 24 à 28, **caractérisée en ce que** la machine est une machine choisie parmi le groupe comportant un moteur, une turbine, un compresseur, une pompe et un générateur.
